# EUROPEAN PATENT APPLICATION

(11) **EP 2 042 037 A1**
(43) Date of publication of application: **01.04.2009**
(21) Application number: 06764393.2
(22) Date of filing: 03.07.2006
(51) Int. Cl.: A01N 65/00

(54) **METHOD FOR USING WATER ORIGINATING FROM THE WASHING OF LUPINS AND USE THEREOF AS AN ENVIRONMENTALLY FRIENDLY INSECTICIDE**

(71) Applicant: Biofal 2002, S.L., 41610 Parada (ES)
(72) Inventor: ORTIZ FALANTES, Juan, 41018 Sevilla (ES)
(74) Representative: Sanz-Bermell Martinez, Alejandro
(86) International application number: PCT/ES2006/070095
(87) International publication number: WO 2008/003795

(57) **Abstract**

The invention relates to the use of water originating from the washing of lupines, with said water being retained. The water is filtered using cellulose filters and the resulting product is stored in containers. Next a bactericidal antiseptic, such as sodium benzoate or benzoic acid, is added. The water is then concentrated by means of reduced-pressure evaporation using a rotary evaporator at ambient temperature and, subsequently, packed in containers suitable for transport and use. The invention can be used for the production of environmentally friendly agricultural insecticides.

## Description

The technical sector involved in this invention is that of farming insecticide techniques, by means of using natural substances which are available as a residue of a procedure or treatment carried out for another purpose.

Lupine seed is a leguminous plant which, before use, is normally given a washing and preparation treatment, particularly because it is used in hydrated form as food for animals and persons. The lupine seeds are gathered and then first washed. This vegetable is rich in alkaloids, which are particularly found in its skin, and these are what are removed by washing to prevent the proliferation of colonies of micro-organisms which could lead to the destruction of the product's good condition.

The water from this washing process is traditionally disposed of. This water is not particularly contaminating, and can be reused with no further processing, though the usual procedure is to pour this down the drain with no additional treatment, since this is dirty water with little contaminating content, as pointed out above.

It has nevertheless been seen that by means of a biological stabilisation and cleaning process followed by a process for concentrating the mixtures of substances originating in washing the lupine seed, a compound useful as an insecticide is produced, rich in alkaloids, which are a toxic product for certain insects, and which thus proves active against pests and through stemming from a natural process such as washing the aforementioned vegetables, does not entail any alteration in the growth of the plants on which it is applied, attaining a highly satisfactory performance, and thus proving fully applicable in farming and particularly appropriate for the type known as ecological farming.

Statement of the prior state of the art.

No processes of this kind have been described in patent literature. There is no known previous history of such use.

This invention covers a procedure for making use of the water from washing lupine seeds as an ecological insecticide and the use of the washing water as an ecological insecticide.

In order to make the following explanation clearer, a sheet of drawings is enclosed with a block diagram representing the stages involved in processing the washing water until this is usable as an insecticide.

The following numbers represent these items:
1. The water stemming from lupine seed washing
2. The filtration process by means of filters consisting of cellulose plates
3. Storage of the washing water already filtered in tanks
4. Biological stabilisation by means of a bactericide antiseptic, such as benzoic acid or sodium benzoate.
5. Concentration through evaporation of the water at low pressure by means of a rotavapor in such a way that the boiling temperature does not exceed ambient pressure, so that the alkaloids, which are the active ingredient of the ecological insecticide, are not harmed.
6. Packaging.
7. Use

### Explanation of the invention.

The water from the lupine seed wash 1 is transported and stored in a facility. This facility may be part of the place where the lupine seeds are washed, or it may be a remote facility, in which case it is transported by means of tanks or conduits.

The water 1, with all the substances in suspension, is subjected to a filtration process 2 by means of cellulose filters. The colloids and other products larger in size than the cellulose filter are retained by these filters.

This water is stored in tanks 3, whose content is biologically stabilised by adding benzoic acid or sodium benzoate, which has a bactericide antiseptic effect.

This content is later on concentrated 5 through a boiling process at ambient temperature reducing the pressure, by means of a rotavapor, without the boiling temperature exceeding ambient temperature, so as not to harm the alkaloids constituting the active ingredient of the insecticide.

The later stage is packaging for its use in fumigation.

### Explanation of one form of embodiment.

As has already been explained, the water from the lupine seed washing process, instead of being disposed of, is reserved in order to give this the treatment and be used as an insecticide.

This water is filtered by means of cellulose filters, so that the particles that it has in suspension are retained and separated from the liquid, so that the colloids and products of larger size than the pitch of the cellulose filter are retained by these filters.

The resulting liquid is stored and treated to stabilise this biologically by adding a bactericide such as benzoic acid or sodium benzoate.

The resulting content is concentrated by means of a boiling process at ambient temperature by means of a rotavapor.

### Later on this is packed in containers for application.

This is for industrial application for making insecticides intended for use in ecological agriculture.

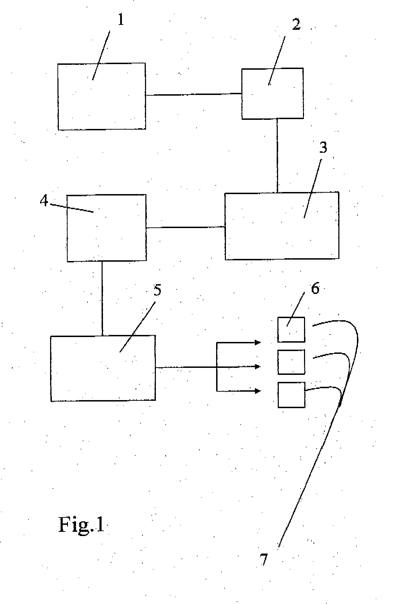

## Claims

1. Procedure for making use of the water from washing lupine seeds as an ecological insecticide, **characterised in that:**
- the lupine seeds are washed, reserving the water from this washing process;
- the water from washing the lupine seeds is filtered;
- it is stored in tanks;
- a bactericide antiseptic is added, such as benzoic acid or sodium benzoate;
- it is concentrated by an evaporation procedure at low pressure by rotavapor at ambient temperature;
- it is stored in recipients for application.

2. Procedure for making use of the water from washing lupine seeds as an ecological insecticide, according to claim 1, **characterised in that** the process for filtering the water from washing the lupine seeds is carried out by means of filters consisting of cellulose plates.

3. Use of water from washing lupine seeds processed according to claims 1 and 2, **characterised in that** it is applied as an insecticide.
